**Europäisches Patentamt**

**European Patent Office**

**Office européen des brevets**

(19)

(11) Veröffentlichungsnummer: **0 212 574 B1**

(12) # EUROPÄISCHE PATENTSCHRIFT

(45) Veröffentlichungstag der Patentschrift: **29.05.91**

(51) Int. Cl.⁵: **G06F 3/023**

(21) Anmeldenummer: **86111235.7**

(22) Anmeldetag: **14.08.86**

(54) **Graphik-Tastatur.**

(30) Priorität: **24.08.85 DE 3530377**

(43) Veröffentlichungstag der Anmeldung:
**04.03.87 Patentblatt 87/10**

(45) Bekanntmachung des Hinweises auf die
Patenterteilung:
**29.05.91 Patentblatt 91/22**

(84) Benannte Vertragsstaaten:
**DE FR GB**

(56) Entgegenhaltungen:
**EP-A- 0 135 836**
**US-A- 4 085 443**

**PATENT ABSTRACTS OF JAPAN, Band 8, No.
215 (P-305)[1652], 2. Oktober 1984; & JP-A-59
99 587 (NIPPON DENKI K.K.) 08-06-1984**

**ELECTRONICS INTERNATIONAL, Band 53, Nr.
20, September 1980, Seiten 77-78, New York,
US; J. GOSCH: "Aids for blind 'read' books,
speak temperatures"**

**NEW ELECTRONICS, Band 16, 26. Juli 1983,
Seiten 44,47-48, London, GB; A. NEALE:
"Membrane switch technology in touch panel and keyboard applications"**

**IBM TECHNICAL DISCLOSURE BULLETIN,
Band 22, Nr. 9, Februar 1980, Seiten
4275-4277, New York, US; A. APPEL et al.:
"Tactile graphic devices"**

(73) Patentinhaber: **Eichholz, Willi**
**Haydnstrasse 9**
**W-4010 Hilden(DE)**

(72) Erfinder: **Eichholz, Willi**
**Haydnstrasse 9**
**W-4010 Hilden(DE)**

(74) Vertreter: **Türk, Gille, Hrabal**
**Brucknerstrasse 20**
**W-4000 Düsseldorf 13(DE)**

## Beschreibung

Die Erfindung betrifft eine Kommandotafel zum Auslösen der Kommandos bei der Graphik-Erzeugung und dem technischen Zeichnen am Bildschirm und auf Plottern und dergl.

Beim Konstruieren am Bildschirm benötigt der Rechner entsprechende Schaltkommandos.

Kommandos für die Grundelemente der Graphik sind z. B. Kreismittelpunkt, Vollkreis, Kreisbogenanfang, Kreisbogenende, Eckverrundung, Maßpfeil, Vollinie, gestrichelte Linie, strichpunktierte Linie usw.

Diese Kommandos werden zur Zeit über auf dem Digitalisierbrett angeordnete Menüfelder, welche mit dem Digitalisierstift angesprochen werden, initiiert.

In der gleichen Weise können Kommandofelder auf dem Bildschirm mit dem Fadenkreuz bzw. Cursor angesprochen werden.

In dieser Arbeitsweise wird jedoch das Auge zur Führung der Hand benötigt.

Aus der JP-A-59 99 587 ist ein Gerät zum computerunterstützten Konstruieren bekannt, bei dem die einzelnen zur Konstruktion bzw. Zeichnung notwendigen Graphik-Elemente in sogenannten Menüfeldern oder Piktogrammen angeordnet sind, die dann mittels eines Stiftes angesprochen und damit initiiert werden. Dies hat jedoch zur Folge, daß das Auge zur Führung der Hand benötigt wird, d. h., das Auge und damit die Aufmerksamkeit der Bedienungsperson von der eigentlichen Konstruktion weg, hin zu den sogenannten Piktogrammen geführt wird, um den in der Hand des Bedieners geführten Stift entsprechend zu lenken.

Aus Electronis International, Band 53, Nr. 20, September 1980, Seiten 77, 78, ist es bekannt, sowohl Bedienungselemente an z. B. Rechnern mit einer Blindenschrift zu versehen, als auch die in einem Rechenvorgang einfließenden einzelnen Terme wie auch das Ergebnis an sich ebenfalls in Form von Erhebungen, d. h. in Form der bekannten Blindenschrift darzustellen. Hierzu werden einzelne schaltbare und ertastbare Stiftkonfigurationen, die aus der Benutzeroberfläche herausragen, benutzt, um den Blinden entsprechende Informationen zu liefern, mit deren Hilfe entsprechende Buchstaben, Ziffern oder Zeichen erkannt werden können. Dabei sind die Bedienungselemente selbst mit entsprechenden zu ertastenden Symbolen versehen, so daß zum einen lediglich geübte Personen z. B. eine Blindenschrift entsprechend deuten können und zum anderen lediglich das Auffinden eines einzelnen Bedienungselementes durch die entsprechende Kennzeichnung ermöglicht wird, so daß eine Steuerung bestimmter graphischer Symbole mit einer derart ausgebildeten Tastatur nicht möglich ist.

Die beim Konstruieren am Bildschirm vom Rechner benötigten entsprechenden Schaltkommandos können z. B. Kommandos für die Grundelemente der Graphik, wie z. B. Kreismittelpunkt, Vollkreis, Kreisbogenanfang, Kreisbogenende, Eckverrundung, Maßpfeil, Vollinie, gestrichelte Linie, strichpunktierte Linie usw., sein.

Die Kommandos können auch von einer Schreibmaschinentastatur oder dergl. ausgelöst werden.

Die Erfindung gemäß Anspruch 1 schafft die Möglichkeit, der Hand eine ertastbare Orientierung zum Finden der entsprechenden Schalter bzw. Taster zu bieten.

Es wird vorgeschlagen, auf einer Kommandotafel die Grundelemente der Graphik und des technischen Zeichnens, wie z. B. Kreis, Kreisbogen, Tangente, verrundete Ecke, Linienarten usw., ertastbar anzuordnen und diesen die zugehörigen Kommandotasten sinnfällig zuzuordnen.

Dabei ergibt sich unter anderem, insbesondere unter dem Gesichtspunkt des Standes der Technik, dadurch, daß entsprechende Graphik-Symbole wie Kreis, Kreisbogen, Linienarten usw. ertastbar auf der Kommandotafel angebracht sind, daß den ertastbaren Graphik-Symbolen entsprechende Kommandoschalter zugeordnet sind und die entsprechend zugeordneten Kommandoschalter (-Taster) innerhalb oder in einem geringen Abstand zum jeweiligen Symbol,. d. h. in deren unmittelbaren Bereich, angeordnet sind, die Möglichkeit, daß der Hand eine bequeme Orientierung zum Finden der Kommandoschalter gegeben wird, ohne daß dabei das Auge und damit die Konzentration von der zu lösenden Aufgabe auf die Symbole gerichtet werden müßte, um die entsprechenden Schaltkommandos zu geben. Vielmehr bleibt die volle Konzentration auf den eigentlichen Arbeitsvorgang gerichtet, ohne daß hierbei eine Störung durch die Notwendigkeit der Bedienung des entsprechenden Rechners auftritt. Desweiteren kann dadurch, daß die entsprechenden Symbole nicht auf den Kommandoschaltern bzw. Tastaturen selbst angebracht sind, sondern durch die erfindungsgemäße Ausgestaltung die Möglichkeit geschaffen wurde, einem Symbol mehrere Kommandoschalter zuzuordnen, die Kommandotafel entsprechend kompakt ausgestaltet und gleichzeitig die Symbole ausreichend groß erstellt werden.

Sind die Graphik-Symbole als auf der Kommandotafel angeordnete Vertiefungen ausgestaltet, so wird dadurch der Gefahr einer Beschädigung der Symbole bzw. einer Abnutzung der Symbole wirksam begegnet.

Sind die Graphik-Symbole als auf der Kommandotafel angeordnete Erhebungen angeordnet, so wird dadurch erreicht, daß bei der Suche bzw.

dem Auffinden der entsprechenden Symbole es nicht zu Fehlbedienungen anderer, anderen Symbolen zugeordneter Schalter bzw. Taster kommt.

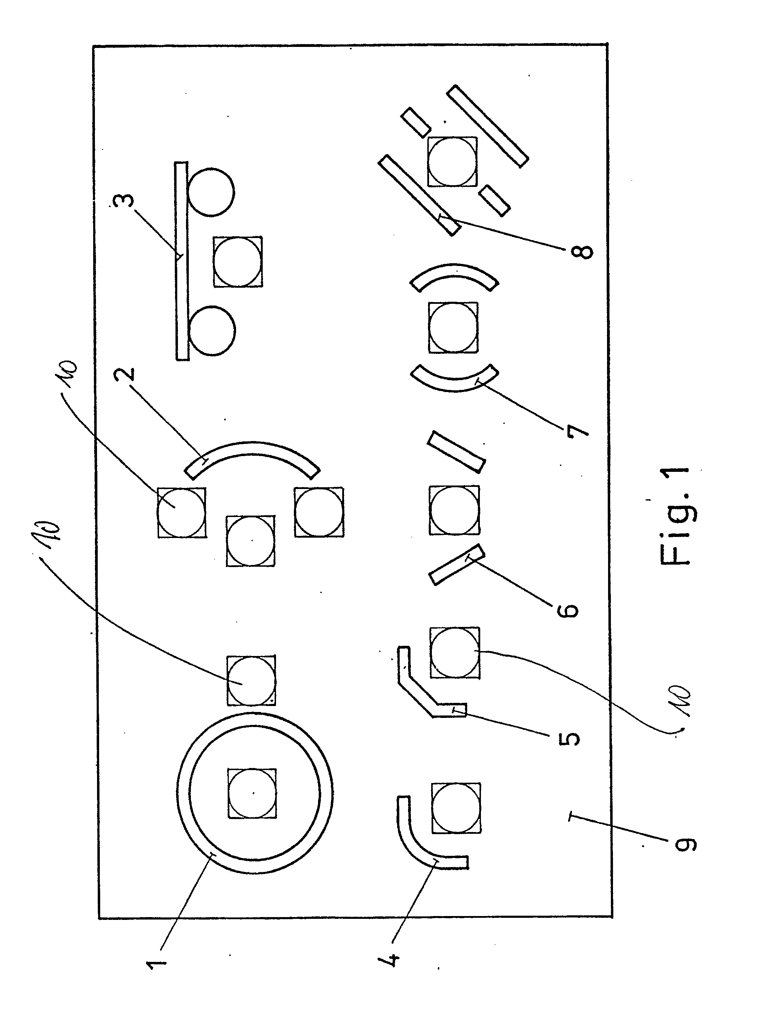

Fig. 1 zeigt die Draufsicht auf eine derartig ausgebildete Kommandotafel 9.

Dem Vollkreis 1 sind die Kommandotasten für Kreismittelpunkt und Radiuslänge zugeordnet.

Dem Kreisbogen 2 sind die Kommandotasten für Mittelpunkt, Bogenanfang und Bogenende zugeordnet.

Symbol 3 stellt eine Tangente, Symbol 4 eine verrundete Ecke, Symbol 5 eine gebrochene Ecke, das trichterförmige Symbol 6 eine Fangfunktion, die Klammer 7 die Erfassung eines Makros und die Streifen 8 eine Schraffur dar.

Diese Symbolik bzw. Tastogramme sind beliebig modifizier- und ausbaubar.

Die Kommandotafel selbst könnte als Folientastatur ausgebildet bzw. mit Mikrotastern bestückt sein.

Zum Ertasten können die Graphik-Symbole positiv oder negativ erhaben ausgebildet sein.

Die Graphik-Kommandos können ohne Zuhilfenahme des Auges allein vom Tastsinn ausgelöst werden, so wie auch beim Autofahren die Bedienung quasi blind erfolgt.

Sowohl die Grundelemente der Graphik und des technischen Zeichnens wie Vollkreis 1, Kreisbogen 2 usw. als auch die zugehörigen Kommandotasten 10 sind auf der Kommandotafel 9 angeordnet. Dementsprechend kann die Kommandotafel 9 wie eine übliche Schreibmaschinentastatur an einen Bildschirm, einen Plotter oder ein ähnliches Gerät angeschlossen werden, und zwar mittels nicht dargestellter elektrischer und/oder elektronischer Verbindungsmittel. Die Kommandotasten 10 werden von Hand gedrückt, wobei diese Kommandotasten über die Oberseite der Kommandotafel 9 überstehen oder auch in deren Oberfläche integriert sein können.

### Ansprüche

1. Kommandotafel (9) zum Auslösen des Kommandos bei der Graphik-Erzeugung und dem Technischen Zeichnen am Bildschrim und auf Plottern und dergl., **dadurch gekennzeichnet**, daß entsprechende Graphik-Symbole (1-8) , wie Kreis (1) , Kreisbogen (2), Linienarten (3; 8) usw. ertastbar auf der Kommandotafel (9) angebracht sind, daß den ertastbaren Graphik-Symbolen (1-8) entsprechende Kommandoschalter (-Taster) (10) zugeordnet sind, und die entsprechend zugeordneten Kommandoschalter (-Taster) (10) innerhalb oder in einem geringen Abstand zum jeweiligen zugeordneten Graphik-Symbol (1-8), d. h. in deren unmittelbaren Bereich, angeordnet sind.

2. Kommandotafel nach Anspruch 1, dadurch gekennzeichnet, daß die Graphik-Symbole (1-8) als auf der Kommandotafel (9) angeordnete Vertiefungen ausgestaltet sind.

3. Kommandotafel nach Anspruch 1, dadurch gekennzeichnet, daß die Graphik-Symbole (1-8) als auf der Kommandotafel angeordnete Erhebungen angeordnet sind.

### Claims

1. Control panel (9) for initiating the command in graphics production and technical drawing on a screen or on plotters and the like, characterised in that corresponding graphic symbols (1-8), such as circle (1), arc (2), kind of line (3; 8) and so on are mounted on the control panel to be sensed by touch, that corresponding command switches (keys) (10) are associated with the graphic symbols (1-8) to be identified, and the corresponding associated command switches (keys) (10) are arranged within, or at a small distance from, the respective associated graphic symbol (1-8), i.e. in its direct vicinity.

2. Control panel according to claim 1 characterised in that the graphic symbols (1-8) are in the form of recesses arranged on the control panel (9).

3. Control panel according to claim 1, characterised in that the graphic symbols (1-8) are arranged as raised portions arranged on the control panel.

### Revendications

1. Panneau de commande (9) pour déclencher des commandes lors de la production de graphiques et de dessins techniques sur un écran et sur des tables traçantes et similaires, **caractérisé** en ce que des symboles graphiques correspondants (1-8), tels qu'un cercle (1), un arc de cercle (2), des types de droites (3; 8) etc, sont disposés sur le panneau de commande (9) en pouvant être identifiés par effleurement, en ce que des commutateurs (touches) de commande correspondants (10) sont associés aux symboles graphiques identifiables par effleurement (1-8), et les commutateurs (touches) de commande (10) sont disposés à l'intérieur ou à une faible distance du symbole graphique (1-8) respectivement associé, c'est-à-dire dans son voisinage immédiat.

2. Panneau de commande selon la revendication 1, caractérisé en ce que les symboles graphiques (1-8) sont réalisés sous la forme de renfoncements disposés sur le panneau de commande (9).

3. Panneau de commande selon la revendication 1, caractérisé en ce que les symboles graphiques (1-8) sont réalisés sous la forme de bossages disposés sur le panneau de commande.

Fig. 1